# EUROPEAN PATENT SPECIFICATION

(11) **EP 2 624 681 B1**
(45) Date of publication and mention of the grant of the patent: **25.12.2019**
(21) Application number: 11830260.3
(22) Date of filing: 07.10.2011
(51) Int. Cl.: A01G 24/27

(54) **A CULTIVATION SUBSTRATE AND ARRANGEMENTS COMPRISING SAID CULTIVATION SUBSTRATE**
PFLANZSUBSTRAT UND ANORDNUNGEN UMFASSEND DAS PFLANZSUBSTRAT
SUBSTRAT DE CULTURE ET AGENCEMENTS COMPRENANTS LEDIT SUBSTRAT DE CULTURE

(30) Priority: 08.10.2010 FI 20106039
(43) Date of publication of application: 14.08.2013
(73) Proprietor: UPM-Kymmene Corporation, 00130 Helsinki (FI)
(72) Inventor: KOSONEN, Harri, FI-53300 Lappeenranta (FI); LUUKKO, Kari, FI-02660 Espoo (FI); TERÄSVUORI, Antti, FI-45200 Kouvola (FI)
(74) Representative: Berggren Oy, Tampere
(86) International application number: PCT/FI2011/050869
(87) International publication number: WO 2012/045915

(56) References cited:
- EP-A1- 1 108 354
- WO-A1-98/53669
- WO-A1-98/53669
- WO-A1-98/53669
- CA-A1- 940 303
- GB-A- 2 026 460
- GB-A- 2 300 100
- JP-A- 3 292 819
- JP-A- 2002 238 360
- JP-B- 49 035 521
- SE-L- 7 612 215
- US-A- 4 531 324
- US-A- 4 937 973
- US-A- 4 937 973
- US-A- 4 937 973

## Description

### Field of the invention

The invention relates to a cultivation substrate according to claim 1.

### Background of the invention

Cultivation substrates are used in the cultivation of various plants, particularly in greenhouse cultivation. Cultivation substrates are provided in various sizes. In efficient greenhouse cultivation, three difference sizes are typically used, the smallest being about 4 cm × 4 cm × 4 cm. A cultivation substrate of this size is used, for example, as a germination substrate and for growing lettuce. An average size of a cultivation substrate is typically 10 cm × 10 cm × 8 cm, and such a cultivation substrate is used, for example, for pre-growing of cucumbers and tomatoes. The size of the largest cultivation substrate typically varies in the range of 10-20 cm × 48-100 cm × 12 cm. A cultivation substrate of this size, having the length of about 0.48 m to 1 m, is normally used for the actual cultivation in such a way that the cultivation substrate of average size, in which the seedling was pre-grown, is on top of the largest cultivation substrate. A separate watering vessel is normally not used under a cultivation substrate of a small or average size, except for the germination stage. Instead, watering vessels of this size may be provided with, for example, a membrane or a corresponding arrangement at the side, to prevent water from evaporating from the side. Under a large cultivation substrate, a watering vessel is typically provided, into which the excess of the irrigation water runs. The irrigation is normally carried out from above.

In efficient greenhouse cultivation, the plants are normally grown in porous cultivation substrates made of either glass wool or mineral wool. In such substrates, however, a moisture gradient is typically formed in the material in the thickness direction of the cultivation substrate, in which case the amount of water is not optimal throughout the cultivation substrate. Moreover, said glass or mineral wools are not an ecological alternative, because such cultivation substrates are replaced at intervals of about three harvests, producing a lot of waste that is difficult to dispose of.

Except for said glass or mineral wools, cultivation substrates have also been made of natural materials, such as peat. The problem with peat is, however, the fact that only a specific type of peat can be used for cultivation substrates, which peat will be exhausted within a little after 10 years, even according to the most optimistic evaluations in the current scenario. Another problem with peat lies in components which are typically released from it and retard the growth of plants, for which reason crops are often smaller than with inert glass and mineral wools.

In a publication GB2026460A, a substance affecting plant meristems (which comprises 5:5'- dichloro- 2,2'-dihydroxydiphenylmethane, or a derivative or salt thereof) is used to impregnate the material intended to form a wall, bottom and/or support of a container designed to hold plants, preferably forest tree plants, during the nursing period thereof.

Even so, there is a need for a novel cultivation substrate in the industry. Preferably, such a cultivation substrate would be made by simple techniques in a cost-effective way.

### Brief summary of the invention

It is an aim of the invention to solve the above-mentioned problems in such a way that a cultivation substrate is obtained, which contains organic natural fibres and which comprises a sufficient air space for the plant. Consequently, a novel cultivation substrate and an inner material for a cultivation substrate are presented. Furthermore, a novel method for manufacturing a cultivation substrate is disclosed.

In this application, the term "inner structure of a cultivation substrate" is used. The inner structures of a cultivation substrate typically contain inner material of the cultivation substrate. If the cultivation substrate comprises a frame, the inner structures of the cultivation substrate typically comprise the structures that are substantially inside the frame of the cultivation substrate. The cultivation substrate does not necessarily have a frame, in which case the inner structures of the cultivation substrate refers to all the structures of the cultivation substrate. The inner structures of the cultivation substrate can also be called the cultivation area of the cultivation substrate, or the area for cultivating a plant.

The cultivation substrate may comprise a frame. If the cultivation substrate comprises a frame, the frame of the cultivation substrate may or may not comprise a watering reservoir. Typically, the frame of the cultivation substrate is placed at least primarily outside the inner structures of the cultivation substrate in such a way that the inner structures of the cultivation substrate are placed primarily inside the frame of the cultivation substrate. However, the inner structures of the cultivation substrate may also extend, for example in the vertical direction, outside the frame of the cultivation substrate.

In this application, the inner material of the cultivation substrate refers to a sheet-like or web-like material, such as, for example, paper, paperboard, cardboard, or a cellulose sheet placed in the cultivation substrate, to form its inner structure or part of it. The inner material of the cultivation substrate comprises at least 40 wt% of organic natural fibres, in dry weight. The inner structure of the cultivation substrate may also comprise other materials than said inner material.

In the solution of the invention, cultivation substrates are formed of a porous web and/or sheet that contains organic natural fibres, that is, of the inner material of the cultivation substrate, by folding and/or cutting and/or rolling and/or gluing and/or creasing and/or placing the web or sheet in such a way that a structural cultivation substrate is formed. The cultivation substrate may also comprise a frame, wherein the cultivation substrate comprises one or more inner structures connected to the frame.

In an advantageous example, at least part, more advantageously most of the inner structures of the cultivation substrate is arranged substantially vertically in the cultivation substrate. In this way, the vertical parts of the inner structure of the cultivation substrate can carry water and nutrients efficiently to the plant.

By the method according to the invention, it is possible to manufacture cultivation substrates in a cost-effective way. The cultivation substrates according to the invention are also environmentally friendly. Moreover, they are inert in that the materials used in the cultivation substrate do not cause significant reductions in the crops of plants.

Equilibrium moisture content refers in this application to a situation in which the cultivation substrate has been kept at the temperature of 23°C and at the atmospheric moisture content of RH 50% for at least one day.

The inner structures of the cultivation substrate according to the invention comprise an inner material, that is, a web-like and/or sheet-like material that contains natural fibres, having a dry content of at least 40 wt% of natural fibres. Furthermore, the inner structures of the cultivation substrate comprise spaces and gaps, whose proportion is at least 20%, advantageously at least 50% or 80% of the volume of the cultivation substrate at the equilibrium moisture content. In an example, the proportion of the spaces and gaps is at least 90% of the volume of the cultivation substrate (at the equilibrium moisture content).

In this application, the proportion of the gaps and holes in the cultivation substrate, from the volume of the cultivation substrate, refers to the space between the surfaces that constitute the inner structures of the cultivation substrate, that is, for example, the surfaces of a sheet and/or a web. Consequently, this definition does not include the spaces and gaps included in the composition of the web/sheet used as the inner material, that is, for example the spaces/gaps between and/or within single fibres.

In an advantageous example, the inner structures of the cultivation substrate comprise inner material whose dry density is at least 20 kg/m³, preferably at least 50 kg/m³. In an advantageous example, the inner structures of the cultivation substrate comprise inner material whose dry density is at least 100 kg/m³, preferably at least 200 kg/m³.

In an advantageous example, the thickness of the web and/or sheet used as the inner material in the inner structures is 0.03 to 2.0 mm at the equilibrium moisture content.

In an advantageous example, the inner material of the cultivation substrate that contains natural fibres, that is, the web and/or sheet, is folded to form the inner structure of the cultivation substrate.

In an advantageous example, the frame of the cultivation substrate is provided with fastening points, such as grooves, in which a web and/or sheet that contains natural fibres is fitted to form the inner structure.

In an advantageous example, the inner structures of the cultivation substrate comprise separate supporting structures which reinforce the structure of the cultivation substrate. In an advantageous example, the supporting structures are made of the inner material of the cultivation substrate. In another advantageous example, the supporting structures are made of another material than the inner material of the cultivation substrate, such as plastic.

In an advantageous example, the supporting structure of the cultivation substrate comprises planar structures, in which the inner material has been glued to the supporting structure of the cultivation substrate, to form the cultivation substrate. The supporting structure of the cultivation substrate may thus comprise or consist of at least one web or sheet of inner material.

In an advantageous example, the inner structure of the cultivation substrate comprises at least one planar supporting structure, to which sheets of inner material have been glued substantially transversely to the supporting structure. In an advantageous example, several inner material sheets are glued between two parallel planar supporting materials, advantageously consisting of inner material, in a direction substantially transverse to the plane of the supporting materials.

In an advantageous example, the bottom of the frame of the cultivation substrate is designed to comprise separate supporting structures, to which the inner structure placed inside the frame is supported.

In an advantageous example, the web and/or sheet used for forming the inner structure is provided with irregular points in the thickness direction, to make the web/sheet more porous than the rest of the web/sheet, in at least these points. These irregular points may be, for example, holes in the web/sheet, or points at which the web/sheet is thinner.

In an advantageous example, the inner structure of the cultivation substrate is at least partly, preferably primarily, formed of inner material placed substantially vertically in the cultivation substrate. Thus, the vertical parts of the inner material may carry water and nutrients from the watering reservoir to the plant.

In an advantageous example, the inner structure of the cultivation substrate is formed of inner material with a wavelike profile. Thus, in an advantageous example, the wavelike profile is formed by combining at least two webs in such a way that one side of the structure comprises a web and/or sheet with a substantially flat profile, and the other side comprises a web and/or sheet with a wavelike profile.

In an advantageous example, the inner structure of the cultivation substrate comprises inner material in which a web and/or sheet with a flat profile and a web and/or sheet with a wavelike sheet are glued to each other. In an advantageous example, the inner material of the cultivation substrate comprises corrugated board.

In an advantageous example, the inner structure of the cultivation substrate is formed by rolling inner material that contains natural fibres.

In the method for manufacturing a cultivation substrate according to the invention, inner material of the cultivation substrate, having a dry content of at least 40 wt% of natural fibres, is inserted in the frame of the cultivation substrate in such a way that the inner structures of the cultivation substrate are provided with spaces and gaps, whose proportion is at least 20%, advantageously at least 50% of the volume of the cultivation substrate at the equilibrium moisture content. In an example, the proportion of said spaces and gaps is thus at least 80%, more advantageously at least 90% of the volume of the cultivation substrate (at the equilibrium moisture content).

In an advantageous example, the method comprises inserting inner material in the frame of the cultivation substrate to form the inner structures of the cultivation substrate
- by placing inner material in grooves inside the frame of the cultivation substrate, and/or
- by gluing inner material to the frame of the cultivation substrate and/or to a supporting structure and/or to another inner material web or sheet, and/or
- by folding inner material inside the frame.

In an advantageous example, the method comprises placing inner material that has been cut into pieces of suitable size and/or creased in advance inside the frame of the cultivation substrate, as the inner structure for the cultivation substrate. The creasing and/or cutting can be performed either with the same device as the assembling of the inner structures of the cultivation substrate, but before the assembling of the inner structures of the cultivation substrate, or it can be done with a separate machine.

In an advantageous example, the method comprises placing inner material as inner structures onto the shaped bottom of the frame for the cultivation substrate, comprising separate supporting structures to support the inner structure placed inside the frame.

In an advantageous example, the method comprises forming inner structures of the cultivation substrate by rolling inner material of the cultivation substrate.

The inner material of the cultivation substrate according to the invention is sheet-like or web-like material intended to be placed as the inner structure of the cultivation substrate, and it contains at least 40 wt% of organic natural fibres (dry content).

In an advantageous example, the inner material of the cultivation substrate comprises irregular points in the thickness direction of the material, for example holes, so that the inner material comprises more porous points.

In an advantageous example, the inner material has a wavelike profile. The inner material may thus comprise at least two webs combined in such a way that one side of the structure comprises a web with a substantially straight transverse profile, and the other side comprises a web with a substantially wavelike transverse profile.

### Description of the drawings

In the following, the invention will be described in more detail with reference to the appended drawings, in which
- Fig. 1: shows a reduced general view of a plant in a cultivation substrate,
- Figs. 2a to 2c: show cultivation substrate structures according to some advantageous embodiments of the invention in reduced views from above,
- Figs. 3a to 3c: show cultivation substrate structures according to some advantageous embodiments of the invention in reduced cross-sectional views from the side,
- Fig. 4: shows a single web according to an advantageous embodiment of the invention seen from the side,
- Figs. 5a to 5b: show cultivation substrate structures according to advantageous embodiments of the invention, seen from above,
- Figs. 6 and 7: show inner structures for cultivation substrates according to an advantageous embodiment of the invention.

### Detailed description of the invention

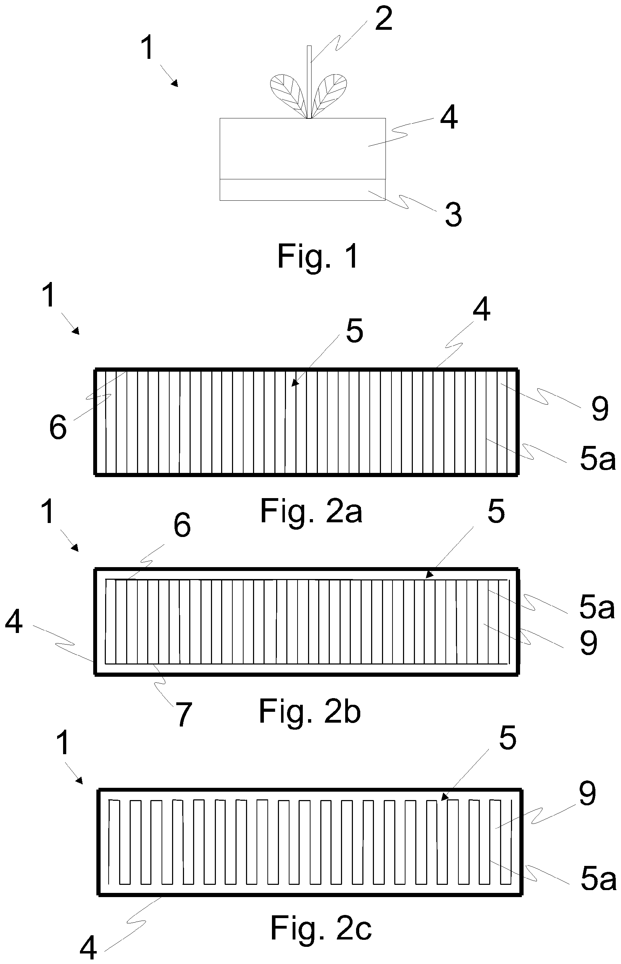

In this application, reference is made to Figs. 1 to 7, in which the following reference numerals are used:
- 1: cultivation substrate,
- 2: plant,
- 3: watering reservoir,
- 4: frame of the cultivation substrate,
- 5: inner structure of the cultivation substrate,
- 5a: inner material of the cultivation substrate,
- 6: fastening point for the inner structure,
- 7: supporting structure,
- 8: irregular or more porous point in the thickness direction of the web/ sheet used in the inner structure,
- 9: space/gap/hole in the cultivation substrate,
- 9a: small space/gap/hole in the cultivation substrate,
- 9b: large space/gap in the cultivation substrate,
- 10: wavelike shape of the inner material,
- 12: incision in the material of the inner structure of the cultivation substrate,
- 15a: first structural unit of the cultivation substrate,
- 15b: second structural unit of the cultivation substrate, and
- α: angle between two adjacent first structural units 15a.

Typically, cultivation substrates have three important properties: They have to be sufficiently rigid and strong not to collapse under the plant; they have to carry and release nutrients and water to the plant sufficiently fast and evenly; and furthermore, they have to contain an ample air space for the roots of the plant.

The inner structure 5 of the cultivation substrate 1 according to the invention comprises inner material 5a for the cultivation substrate. The inner material 5a comprises a considerable amount of organic natural fibres. The content of the organic natural fibres of the inner material 5a is advantageously higher than 40 wt%, more advantageously higher than 60 wt%, and most advantageously higher than 80 wt%, calculated in dry content.

In this application, the term natural fibre refers to various organic fibres of natural origin. The natural fibre may comprise recycled fibre and/or virgin fibre. The natural fibre may be, for example, mechanically defibrated fibre, dissolving cellulose fibre, sulphite cellulose fibre, sulphate cellulose fibre, or viscose fibre. According to an advantageous example, the natural fibre has been subjected to chemical treatment to reduce the lignin content. In one embodiment, the natural fibre is selected from the group of wood-based fibres, fibres of plant origin, and their derivatives and mixtures. In one example, the natural fibre is selected from the fibres of wood, sisal, jute, hemp, flax, straw, and other annual plants, as well as mixtures of these.

The inner structure 5 of the cultivation substrate according to the invention comprises planar surfaces, and it preferably consists of a web-like material, such as sheets. The web-like material according to the invention may comprise, for example, cellulose sheets, paper, paperboard, cardboard, or fibrous composite structure. In an advantageous example, the web-like material comprises a wavelike structure, for example corrugated board or a similar structure.

The cultivation substrate according to the invention can also be referred to, in addition to the cultivation substrate, by the following terms: a germination cube, a germination substrate, a cultivation cube, a growth cube, and a growth substrate.

The invention is based on the idea that inner structures 5 of cultivation substrates 1 are made of an inner material 5a for a cultivation substrate that contains natural fibres in such a way that strong structures are obtained.

Furthermore, the inner structures 5 are formed in such a way that gaps/spaces are left in the inner structures 5 of the cultivation substrate, so that air is available to the plant. According to the invention, such cultivation substrates are made, for example, by folding, die cutting, cutting, creasing, folding, gluing, and/or assembling inner material 5a for a cultivation substrate to form desired inner structures of the cultivation substrate. The cultivation substrate does not necessarily need to comprise an actual frame. For example, a small or medium-sized cultivation substrate does not usually have an actual frame.

In an advantageous example, the proportion of the inner material 5a is not more than 80 % of the volume of the cultivation substrate 1 (calculated at the equilibrium moisture content). Thus, the inner structures of the cultivation substrate comprise spaces and gaps in at least 20 % of the volume of the cultivation substrate (at the equilibrium moisture content). In another example, the proportion of the inner material 5a is not higher than 50% of the volume of the cultivation substrate 1. Thus, the inner structures of the cultivation substrate comprise spaces and gaps in at least 50% of the volume of the cultivation substrate (at the equilibrium moisture content). In a third example, the proportion of the inner material 5a is not higher than 20% of the volume of the cultivation substrate 1. Thus, the inner structures of the cultivation substrate comprise spaces and gaps in at least 80% of the volume of the cultivation substrate (at the equilibrium moisture content).

During the cultivation of plants, preferably about one half (for example 30 to 70%) of the volume of the inner material 5a of the cultivation substrate is water and nutrients, and about one half (for example 30 to 70%) is air.

The proportion of spaces and gaps in the volume of the cultivation substrate can be determined, for example, by imaging the cultivation substrate and by analyzing, from the image, the ratio of the volume of webs/sheets to the spaces, gaps or holes in the structures of the cultivation substrate. The proportion of the spaces, gaps and holes can also be calculated when the grammage and thickness of the single webs, and the density of the inner material of the cultivation substrate are known.

As mentioned earlier, the proportion of gaps and spaces in the volume of the cultivation substrate refers, in this application, to the space between the materials forming the inner structures of the cultivation substrate, that is, one or more sheets and/or webs. Thus, the proportion of the gaps and holes does not include those gaps and holes which are present, for example, between and/or inside single fibres in the web/sheet. If the inner material comprises two or more webs attached to each other at least partly, the air spaces between these webs attached to each other are calculated in the proportion of the gaps and holes.

in an advantageous example, most of the inner material 5a forming the inner structures 5 of the cultivation substrate 1, particularly the inner material 5a extending to the watering reservoir 3, is placed substantially vertically in the cultivation substrate 1, wherein the inner material 5a, such as sheets and/or webs, may carry water and nutrients efficiently to the plant 2.

Preferably, the inner material 5a used for forming the inner structures of the cultivation substrate 1 is placed, at least partly, substantially vertically in a watering reservoir, as shown in Figs. 2 to 6. In this way, the plant can grow its roots downwards along the inner material, such as a sheet.

In an advantageous example, the inner structure 5 of the cultivation substrate 1 comprises inner material 5a which has been made by dry forming. In this way, a porous structure can be obtained, in which the cultivation substrate provides a suitable amount of air and water for the plant.

In another advantageous example, the inner structure 5 of the cultivation substrate 1 comprises inner material 5a which has been made by wet forming.

In most cases of commercial cultivation of plants, the water is introduced to the cultivation substrate 1 from above. The inner material 5a used in the inner structures 5 of the cultivation substrate according to the invention is advantageously permeable to water in such a way that excess water runs downwards, wherein the plant can take in the water it needs, and the excess water is simultaneously transferred through the inner material of the cultivation substrate into the watering reservoir.

By employing the embodiments shown in Figs. 2 to 7, the cultivation substrate 1 can be provided with porous inner structures even in the case of using a particularly dense inner material 5a. In this case, an air space is left in the cultivation substrate 1 even if a single sheet or web used in the inner structures of the cultivation substrate were otherwise too dense in its structure. This is important, because plants always need air.

In an advantageous example, the inner material 5a used in the inner structure 5 of the cultivation substrate comprises a particularly dense web-like or sheet-like material that contains natural fibres. Preferably, the density of the inner material 5a is not higher than 1000 kg/m³. In an advantageous example, the density of the inner material 5a is at least 20 kg/m³, more advantageously at least 50 kg/m³. In an advantageous example, the density of the inner material 5a is at least 100 kg/m³, more advantageously at least 200 kg/m³. In an advantageous example, the density of the inner material 5a is at least 400 kg/m³. The inner material 5a may be particularly dense and still leave a sufficient amount of air available for the plant, because the inner structures 5 of the cultivation substrate according to the invention leave a sufficient air space for the roots of the plant.

In an advantageous example, inner material 5a with a thickness of about 0.03 to 2.0 mm at the equilibrium moisture content is used in the inner structures of the cultivation substrate.

The plant should obtain nutrients and water with the help of the inner material 5a in the inner structures of the cultivation substrate. According to an advantageous example, the inner structures 5 of the cultivation substrate comprise inner material 5a extending upwards from the watering reservoir 3 and having fibres which are oriented primarily vertically. In this way, thanks to the properties of the cellulose in the natural fibres, the lifting of water to be substantially evenly available for the plant 2 may be particularly successful, because the inner material 5a that comprises cellulose-containing natural fibres is particularly absorbent for water to be taken up the plant.

Preferably, for forming the inner structures 5 of the cultivation plant 1, a rolllike or sheet-like inner material 5a is used for shaping inner structures 5 of the cultivation substrate. In an example, the distance between planar surfaces of inner materials used in the inner structures is about 0.1 to 10 mm.

The inner material 5a that constitutes the inner structures 5 of the cultivation substrate is made, in an advantageous example, of pulp sheets by cutting and/or creasing by finishing devices of a board press. After this, the finished shaped parts are carried, preferably tightly packed, to the client who can easily fold them into a cultivation vessel. Environmental safety and efficiency are thus emphasized also in the transportation, because not much air has to be transported.

In an advantageous example, the inner structures of the cultivation substrate contain lots of spaces and gaps 9, as shown in Figs. 2a-2c, 3a-3c, 5a-5b, and 6, wherein the roots of the plant obtain the oxygen they need. Preferably, to increase the strength of the cultivation substrate, the inner material 5a used in the inner structures of the cultivation substrate is substantially dense, so that the inner material 5a itself typically does not contain sufficient air for the roots of the plant. In spite of this, the spaces and gaps 9 in the inner structures 5 of the cultivation substrate 1 provide an efficient passage of air to the roots of the plant. Thus, in spite of the fact that either phase does not necessarily have optimal conditions for the growth of the plant, the structure of the cultivation substrate as a whole makes it possible that all the requirements of the cultivation substrate are met.

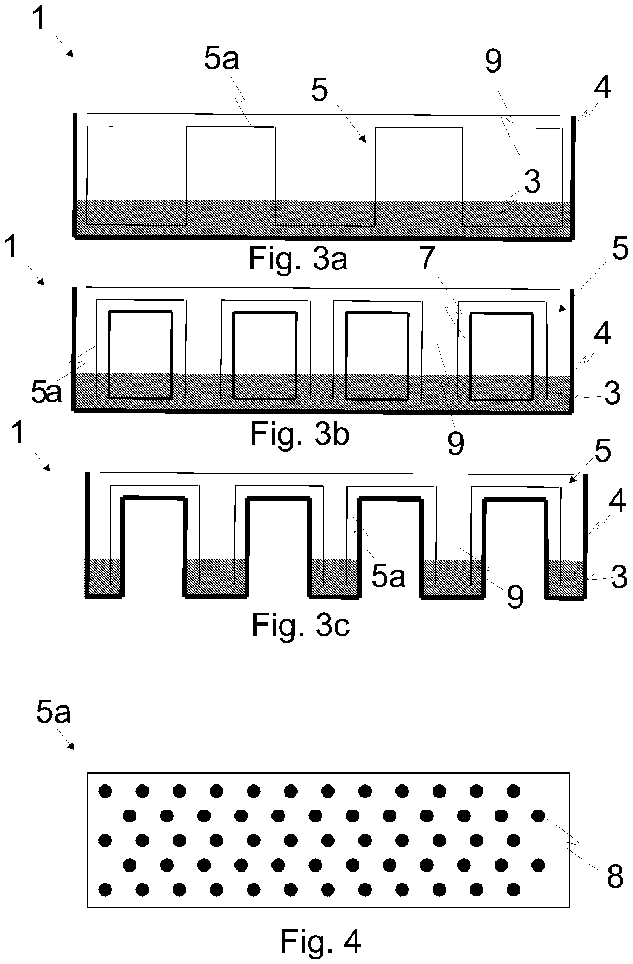

In addition to and/or instead of what has been mentioned above, the inner material 5a may also comprise more porous points 8 in the thickness direction of a single sheet/web, for example openings shown in Fig. 4, which make it easier for the roots of the plant to extend into or through the material used as the inner material 5a, such as sheets that contain natural fibres.

Figure 1 shows an example of the structure of a cultivation substrate with a plant 2, seen in a side view. The figure shows the cultivation substrate 1, the plant 2, a watering reservoir 3, and the frame 4 of the cultivation substrate.

Typically, the plant 2 is planted in the upper part of the cultivation substrate 1. The lower part of the cultivation substrate 1 may be provided with the watering reservoir 3 which may be either a separate arrangement or a part of the cultivation substrate 1. However, the watering reservoir 3 is not necessary. The watering of the plant is normally performed from above and/or from below. The inner structure 5 of the cultivation substrate 1 comprises inner material 5a according to the invention, that is, material that comprises natural fibres and planar surfaces. If the cultivation substrate comprises an actual frame, the frame 4 of the cultivation substrate may preferably comprise, for example plastic, such as polyethylene, polypropylene or polyethylene terephthalate (PET) plastic.

Figures 2a-2c show cultivation substrate structures according to some advantageous embodiments in reduced views seen from above. The figures show, as examples, three different alternatives of how the inner structures 5 of the cultivation substrate can be placed in the cultivation substrate 1 by applying inner material 5a that contains natural fibres.

In an example, the structure of the cultivation substrate shown in Figs. 2a-2c shows a large cultivation substrate, wherein a separate, smaller cultivation substrate, in which a plant is planted, can be placed on top of the shown structure. In another advantageous example, a separate, substantially horizontal planar surface, in which a plant is placed to grow, is placed on top of the structure of the cultivation substrate shown in Figs. 2a-2c. Figures 2a-2c do not show the plant 2, said separate smaller cultivation substrate, or said possible separate planar substrate.

The structures shown in Figs. 2a-2b are suggestive, and for example the inner structure shown in Fig. 2a does not need to extend from one end to another in the transverse and/or longitudinal direction of the cultivation substrate, but it can also be arranged shorter so that more openings are formed at the edges. Correspondingly, the inner structure 5 of the cultivation substrate shown in Figs. 2b and 2c may be longer or shorter in the transverse and/or longitudinal direction.

An arrangement of Figs. 2a-2c is preferably made, for example, by inserting inner material 5a of the cultivation substrate as an inner structure 5 of the cultivation substrate in the frame 4 of the cultivation substrate 1, by folding, placing in grooves, and/or gluing the inner materials 5a which have been ready cut and/or creased. In an advantageous example, the inner material 5a comprises one or more pulp sheets.

Inner structures 5 for the cultivation substrate 1 are formed of the inner material 5a in such a way that several substantially parallel walls of said inner material 5a are formed in either the longitudinal and/or width direction, spaced by air gaps. Thus, at least two or at least three, preferably at least five of these substantially parallel walls are provided. The walls may extend from one end to the other in the cross direction and/or the width direction of the cultivation substrate, but this is not necessary.

In the arrangements of Figs. 2a-2c, the natural fibre based inner material 5a is typically capable of retention of a suitable amount of water and nutrients needed by a plant when the cultivation substrate 1 is used for growing the plant. Furthermore, the arrangements of Figs. 2a-2c may be sufficiently strong and include a sufficient space of air for use by the plant.

Figure 2a shows an advantageous arrangement as a structure for the cultivation substrate 1 according to the invention. Here, the inner material 5a is placed in grooves in the frame 4 and/or is glued to the frame 4 of the cultivation substrate 1. To obtain a substantially uniform structure, the fastening is preferably done in marked fastening points 6 (for example, grooves in the frame of the cultivation substrate).

If the inner material 5a of the cultivation substrate is placed in grooves in the frame of the cultivation substrate to form the inner structure 5 of the cultivation substrate, the inner edges of the frame 4 of the cultivation substrate comprise grooves, in which the inner material 5a can be placed and which preferably also support the inner material 5a. The strength of the inner structure 5 of the cultivation substrate can be further reinforced, for example, by gluing instead of merely placing inner material 5a, such as sheet ends, in said grooves. It is also possible to fasten inner material 5a at its ends to the frame 4 of the cultivation substrate, not only by placing or gluing in the grooves, but also in another way of prior art, for example by applying suitable fastening means.

Figure 2b shows another advantageous example of the arrangement according to the prior art for inner structures of the cultivation substrate. Here, the inner structures 5 of the cultivation substrate 1 comprise separate supporting structures 7, for example elongated supporting sheets, to which the transverse sheets of the inner structure 5 are e.g. glued and/or fastened mechanically. Such an implementation may further improve the strength of the structure of the cultivation substrate 1. The material for the supporting structures 7 may be, for example, paper, paperboard, cardboard, natural fibre composite, and/or the same inner material, of which the inner structure is made.

Figure 2c shows a third advantageous example of how cultivation substrates 1 can be formed by using inner material 5a that contains natural fibres in the inner structures of the cultivation substrate. In this alternative, the inner structure 5 of the cultivation substrate 1 is formed by folding the inner material 5a of the cultivation substrate inside the frame 4 of the cultivation substrate 1.

To facilitate the finishing of the inner structure 5 of the cultivation substrate 1, the inner material 5a, for example sheets of natural fibre, are preferably ready creased or treated in a corresponding way before they are placed as the inner structure 5 of the cultivation substrate 1.

Figures 3a-3c show cultivation substrate structures according to some advantageous embodiments of the invention in reduced cross-sectional views seen from the side.

In Figs. 3a-3c, the inner material 5a, such as at least one pulp sheet, forms a wavelike inner structure 5, in which the inner material 5a placed in the lower part of the inner structure is in liquid in a watering reservoir and may take up water and nutrients along said inner material for the plant to be placed in the upper part of the inner structure 5.

In these Figs. 3a-3c, the inner material 5a of the cultivation substrate is inserted as inner structures 5 of the cultivation substrate by folding in such a way that the inner structure comprises planes whose upper part, *i.e.* the part towards the plant, is substantially horizontal, and which extend from the horizontal plane substantially vertically towards the watering reservoir 3. To facilitate the installation of the inner structure 5 of the cultivation substrate 1, the inner material 5a is preferably ready creased or treated in a corresponding way before its installation inside the frame 4 of the cultivation substrate 1 to form the inner structure 5 of the cultivation substrate.

Figure 3a shows an example of the structural arrangement of the inner part of the cultivation substrate 1. In this alternative, the inner material is folded as the inner structure in the cultivation substrate in such a way that the vertical parts of the inner material can carry water and nutrients from the watering reservoir 3 for the plants. The plant itself is planted, in this arrangement, preferably in the horizontal part of the inner material 5a. However, this kind of a solution is not necessarily very strong and is thus primarily suitable for plants of light weight.

Figure 3b shows an example of a structural arrangement of the inner part of the cultivation substrate 1, in which separate supporting structures 7 are used for supporting the inner structure 5. The supporting structures 7 are preferably made of such a material that they do not affect the growth of the plants. The supports 7 increase the mechanical strength of the cultivation substrate, because they make the inner structure 5 of the cultivation substrate stronger and not as easily collapsible even under a heavy plant as the solution of Fig. 3a. The supports 7 are preferably re-usable. Most advantageously, they are substantially rectangular. The supporting structures are placed inside the frame 4. Their material may be, for example, plastic or another inert material whose mechanical properties and dimensions are not significantly changed by water.

In an advantageous example, inner structures for a cultivation substrate are formed by forming pieces with a U-shaped cross-section of the inner material 5a of the cultivation substrate, the tips immersed in a nutrient solution and taking up water and nutrients for the plant. The U-shaped pieces are preferably placed on top of the supporting structures 7. Preferably, the tips of the U-shaped pieces are placed in separate grooves which may be provided, for example, in the frame of the cultivation substrate. In this solution, the plant is preferably planted on the substantially horizontal part of the inner material 5a on top of the supporting structure 7.

In another advantageous example for forming the inner structure 5 of the cultivation substrate, the inner material 5a is folded in such a way that the topmost, substantially horizontal surfaces are placed on top of the supporting structure 7. Also in this arrangement, the plant itself is preferably planted on the substantially horizontal part of the inner material 5a on top of the supporting structure 7.

Figure 3c shows a further example of the structural arrangement of the cultivation substrate 1. To increase the mechanical strength of the cultivation substrate, it may be necessary in some cases that the bottom of the frame 4 of the cultivation substrate 1 is ready shaped so that it comprises separate supporting structures, to which the inner structure placed in the frame is supported. In the arrangement of Fig. 3c, the supporting structure of the cultivation substrate 1 is part of the frame 4 of the cultivation vessel 1, in which case the separate supporting structures 7 are typically unnecessary. This kind of a solution is typically strong enough to carry even very heavy plants.

In an advantageous example, in the situation of Fig. 3c, the inner structure 5 of the cultivation substrate is formed by placing inner material 5a onto the shaped bottom of the frame structure 4 of the cultivation substrate in such a way that the tips of the inner material 5a are immersed in the watering reservoir 3 and take up water and nutrients for the plant. This can be done, for example, by forming pieces with a U-shaped cross-section of the inner material 5a of the cultivation substrate. The tips of the inner material 5a immersed in the watering reservoir can be placed in separate grooves. The plant is preferably planted on the substantially horizontal part of the inner material 5a on top of the elevated part of the shaped bottom.

In another advantageous example, in the situation of Fig. 3c, for forming the inner structure 5 of the cultivation substrate, inner material 5a is placed onto the shaped bottom of the frame structure 4 of the cultivation substrate in such a way that the inner material 5a is folded on top of the shaped bottom, substantially as shown in Fig. 3a. Consequently, the shape of the inner material 5a substantially conforms to the contour of the bottom of the frame of the cultivation substrate. Thus, the plant is preferably planted on the substantially horizontal part of the inner material 5a on top of the elevated part of the shaped bottom of the frame 4 of the cultivation substrate.

Figure 4 shows an example of rough or more porous points, for example holes or other corresponding solutions, made in the inner material 5a, such as a planar sheet or the like. The figure shows a view from the side of the planar surface, that is, for example a single sheet in a side view in the situations of Figs. 2a-2c. Irregular points in the thickness direction can be used, not only in the examples shown in Figs. 2a-2a, but also, among other things, in the examples shown in Figs. 3a-3c, 5a-5b and 6.

In an example, the planar surfaces of the inner material 5a comprise more porous points 8, for example holes shown in Fig. 4, in their thickness direction. The function of these is to make it easier for the roots of the plant to extend into or through the inner material 5a. Plants tend to extend their roots into and through the inner material 5a used in the inner structures 5 of the cultivation substrate, to be able to take up water and nutrients as well as possible. An inner material web or sheet made of natural fibres or substantially containing natural fibres, particularly if thick, is often so dense that it and its surface are poorly permeable to the roots of the plant. By providing more porous points 8 or irregular points in the inner material 5a in the thickness direction of the inner material, as shown in Fig. 4, the roots of the plant can extend into or through the web or sheet more easily.

The irregular points, *i.e.* the more porous points 8 in the thickness direction of the inner material 5a of the cultivation substrate may be regularly or irregularly spaced on the planar surface of the inner material 5a. Such more porous points 8 are typically made mechanically. The more porous points 8 may be particularly useful when very dense sheets are used, which are attached or almost attached to each other.

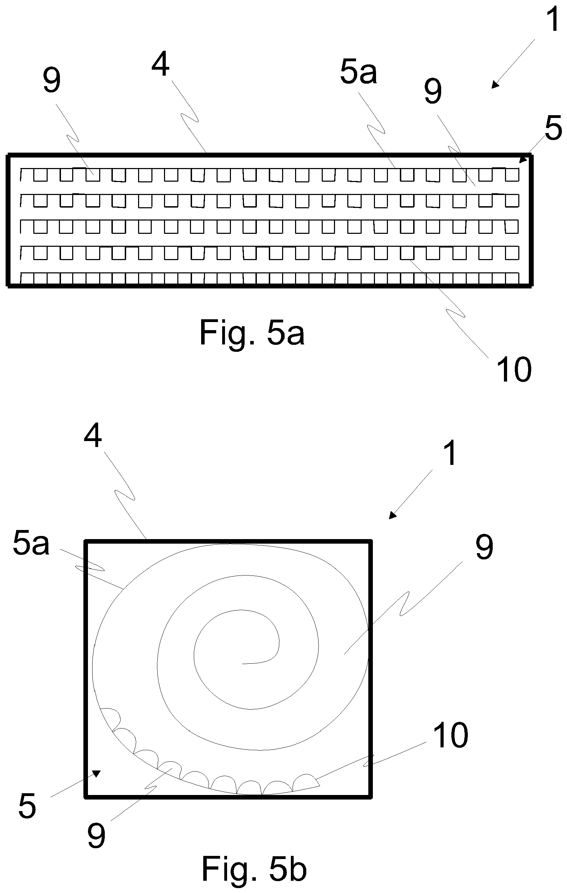

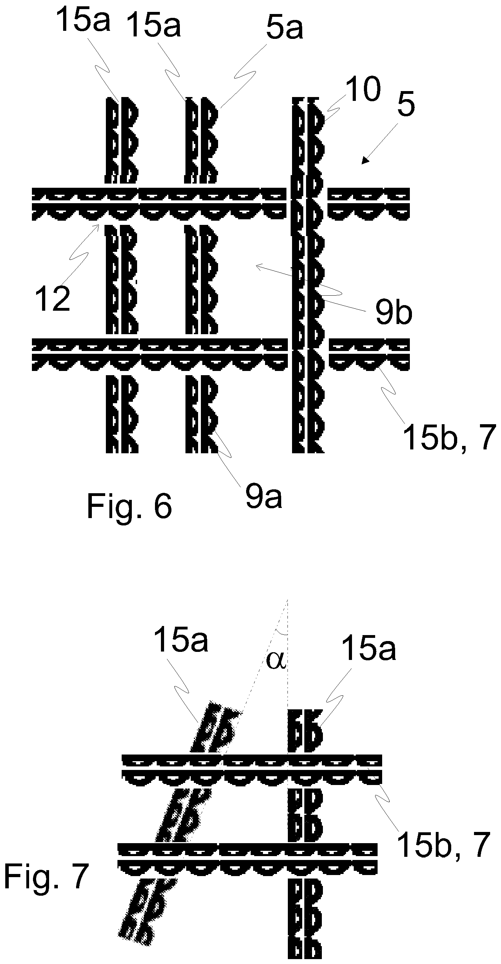

Figures 5a-5b and Fig. 6 show some examples of cultivation substrate structures according to the invention, seen from above.

The wall material 5a used for the inner structures 5 of the cultivation substrate 1 may be corrugated board or a structure similar to corrugated board. Thus, for example two or more webs based on natural fibres can first be used to make corrugated board or another wavelike structure with a corrugation 10 of a desired shape and size.

In an advantageous example, the inner material 5a of the cultivation substrate comprises material in which two webs have been combined to form a wavelike profile in which one side of the structure comprises a web or sheet with a straight transverse profile, and the other side comprises a web or sheet with a wavelike transverse profile.

In an advantageous example, the inner structure 5 of the cultivation substrate 1 comprises inner material 5a having a wavelike profile and being made of at least two webs by winding in such a way that the webs are not glued together but one of the webs is cockled during the winding.

When inner material 5a with a wavelike profile is used in the inner structure 5 of the cultivation substrate, the waves 10 of the inner material with the wavelike profile are preferably vertical in the inner structure, as shown in Figs. 5a and 5b and Fig. 6.

In an advantageous example, inner structures 5 of the cultivation substrate are formed by placing inner material 5a of the cultivation substrate, comprising a wavelike profile, inside the frame 4 of the cultivation substrate 1 adjacent to each other in the width and/or longitudinal direction, as shown in Fig. 5a. In some embodiments, it may be advantageous to place the inner material 5a with a wavelike profile into grooves, as shown in Figs. 2a-2c, and/or to fasten the inner material 5a at its edges to the frame 4 of the cultivation substrate in another way.

In an advantageous embodiment, inner structures 5 of the cultivation substrate are formed of inner material 5a of the cultivation substrate by winding/rolling the inner material 5a inside the frame 4 of the cultivation substrate 1 as shown in Fig. 5b, that is, by winding the inner material 5a in a roll. Preferably, the inner material wound in this way comprises inner material with a wavelike profile, but this is not necessary. In an advantageous example, the inner material 5a wound in a roll is corrugated on one side, preferably on the inner side facing the centre of the roll.

In an advantageous example, the inner material 5a used in the inner structures 5 of the cultivation substrate shown in Figs. 2 to 7 comprises binding agents to increase its wet strength.

In an advantageous example, the inner material used in the inner structures of the cultivation substrate comprises cellulose, paper, paperboard, natural fibre composite, and/or cardboard. In an advantageous example, the inner material used in the inner structures of the cultivation substrate is made by dry forming. In another example, the inner material used in the inner structures of the cultivation substrate is made by wet forming. Said inner material preferably comprises organic natural fibres.

Figures 6 and 7 show inner structures 5 of a cultivation substrate according to an advantageous embodiment in a reduced view from above. The figures show, among other things, part of the inner structure 5 of the cultivation substrate, the inner material 5a of the cultivation substrate, a first structural unit 15a of the cultivation substrate, a second structural unit 15b (supporting structure 7) of the cultivation substrate, a small gap 9a of the cultivation substrate, a large gap/space 9b of the cultivation substrate, and the wavelike shape 10 of the inner material.

In this application, the term "wavelike" means folded. The folds of the wavelike shape can be round and/or they may comprise edges.

In this application, "substantially vertical (or horizontal)" means that the structure deviates from said direction preferably not more than 20°, more preferably not more than 10° and most preferably not more than 5°.

The inner structures 5 of the cultivation substrate shown in Figs. 6 and 7 represent a part of a larger cultivation substrate, on top of which it is possible to install a separate cultivation substrate of smaller size, in which the plant itself is planted. In other words, Fig. 6 shows an example of a cultivation substrate 1 that carries a plant particularly in its maturity. The size of such a framed structure is typically about (10-30 cm) × (5-15 cm) × 40 cm to several metres.

When said carrying cultivation substrate 1 is used together with a smaller cultivation substrate, the roots of the plant extend from the smaller cultivation substrate to the larger cultivation substrate, that is, to said carrying cultivation substrate, when the plant grows. Figures 6 and 7 do not show the plant 2 nor said separate substrate which can be placed above and/or on top of the inner structures 5 shown in the figures. The inner structures 5 of the cultivation substrate may be placed in connection with a frame 4 for the cultivation substrate.

Preferably, the inner structures 5 of the cultivation substrate 1 comprise wall structures which are called, in this application, first structural units 15a and second structural units 15b of the cultivation substrate. The first structural units 15a and the second structural units 15b are preferably placed at an angle of at least 45 degrees to each other.

Preferably, the cultivation substrate comprises relatively large and rigid walls placed coarsely, which save the material and may contribute to the sufficient supply of air, water and nutrients for the plant. The more densely the structural units 15a, 15b of the cultivation substrate are placed with respect to each other, the stronger the structure of the cultivation substrate 1. However, air gaps are preferably provided between the structural units, to give the cultivation substrate a suitable light weight and to provide sufficient air for the plants.

The first structural unit 15a of the inner structures 5 of the cultivation substrate 1 comprises inner material 5a. Advantageously, the proportion of the inner material 5a of the first structural units 15a is at least 80%, more advantageously at least 90% and most advantageously at least 95%.

At least one structural unit 15a, 15b, advantageously at least 10% of the structural units 15a, 15b, more preferably at least 30% of the structural units 15a, 15b, more advantageously at least 50% of the structural units 15a, 15b and most advantageously at least 90% of the first and/or second structural units comprise at least one planar wall comprising inner material, more preferably at least two and most preferably at least three said planar walls comprising inner material and being substantially parallel. Said parallel walls that comprise inner material are preferably provided in said at least one structural unit, advantageously in at least 10% of the structural units, more advantageously in at least 50% of the structural units, and most advantageously in at least 90% of the structural units, not more than 10 walls, more advantageously not more than 8 walls and most advantageously not more than 5 walls. The number of layers or walls may vary in the different structural units 15a, 15b.

Suitably, small gaps 9a are provided in at least one space between the planar walls of the first structural unit 15a, the gaps being part of the first structural unit. Furthermore, small gaps 9a are also provided in at least one space between the planar walls of the second structural unit 15b, the gaps being part of the second structural unit.

Preferably, the structural unit 15a, 15b comprises several small gaps 9a, in which the inner diameter of the gap 9a, seen at the largest point in the horizontal plane (horizontal cross-sectional plane), is not greater than 5 mm, more advantageously not greater than 3 mm and most advantageously not greater than 1.5 mm. The area of the small gap 9a or the so-called porous structure, seen in the horizontal plane, is preferably at least 0.8 mm² and more preferably at least 1 mm². The area of these small gaps 9a or so-called porous structures, seen in the horizontal plane, is preferably not greater than 25 mm², more preferably not greater than 20 mm² or not greater than 15 mm², most preferably not greater than 10 mm² or not greater than 5 mm². One function of the small porous structures is to take up water and/or nutrients for use by the roots of the plant. In other words, the small gaps 9a which are part of the structural unit 15a, 15b can be used to lift capillary water. Thus, water and/or nutrients can be carried to the plants in a particularly optimal way.

The small gaps 9a can be implemented, for example, by using a wavelike structure in such a way that the structural unit 15a, 15b comprises said small gaps 9a or so-called pore orifices. The wavelike structure that comprises wavelike shapes 10 may be provided, for example, on the outermost wall of the structural unit 15a, 15b of the cultivation substrate, and/or between the planar walls of said structural unit. Preferably, shapes comprising small gaps 9a, such as a wavelike structure, are provided in at least every other space between the walls.

The wavelike structure may be formed, for example, in such a way that a web and/or sheet with a straight profile and a web and/or sheet with a wavelike profile are glued together. In this way, the structure suitably comprises at least one web or sheet with a straight transverse profile and at least one web or sheet with a wavelike transverse profile. The waves 10 of the inner material 5a with a wavelike profile are preferably vertical, as shown in Figs. 6 and 7. In an advantageous example, the wavelike structure originates from so-called corrugated board.

The first structural unit 15a is preferably placed in a substantially vertical direction. Furthermore, the second structural unit 15b is preferably placed in a substantially vertical unit. The substantially vertical structural units typically have a particularly good load bearing capacity. Furthermore, they may have a particularly good water throughput.

The walls included in the structural unit 15a, 15b are preferably laid out in such a way that the natural fibres in them are placed primarily (that is, more than 60% of said natural fibres, preferably more than 70% of said natural fibres) vertically, so that they can carry water and nutrients efficiently to be available for the roots of the plant.

First structural units 15a are preferably placed substantially in parallel as inner structures 5. In other words, the angle α (shown in Fig. 7) between two adjacent first structural units 15a is preferably 0 to 20°, more preferably 0 to 10° and most preferably 0 to 5°. In the situation shown in Fig. 6, the angle α is 0°; that is, the first structural units are parallel to each other. In Fig. 6 and Fig. 7, the second structural units are parallel to each other.

Second structural units 15b are preferably placed substantially in parallel as inner structures 5. In other words, the angle between two adjacent second structural units 15b is preferably 0 to 20°, more preferably 0 to 10° and most preferably 0 to 5°. The second structural units 15b are used as a so-called supporting structure 7 in the inner structures. Preferably, the second structural units 15b used as the supporting structure 7 are made of the same inner material 5a as the first structural units 15a. In an advantageous example, the first structural units 15a and/or the second structural units 15b comprise paper, paperboard, pulp sheets, or cardboard, preferably corrugated board or another wavelike structure.

Preferably, the first structural unit 15a and the second structural unit 15b are substantially transverse to each other. However, the angle may vary. Suitably, the angle between the first structural unit 15a and the second structural unit 15b is, seen in the horizontal plane, 90°±45°, more suitably 90°±20°, more advantageously 90°±10°, and preferably 90°±5°.

The structural unit 15a, 15b of the cultivation substrate may extend from one end to the other end of the cultivation substrate in the longitudinal and/or width direction, but this is not necessary.

Preferably, the inner structures 5 of the cultivation substrate comprise several first structural units 15a and several second structural units 15b. The distance between two structural units 15a, 15b can be calculated as the distance between the closest surfaces of said structural units. The distance between the two structural units 15a, 15b may vary.

Advantageously, the shortest distance between two first structural units 15a closest to each other is, calculated in at least one point, preferably as an average, at least 5 mm, more suitably at least 8 mm or at least 10 mm, and more advantageously at least 15 mm, and most advantageously at least 20 mm. Advantageously, the shortest distance between two first structural units 15a closest to each other in at least one point, preferably calculated as an average, is not greater than 100 mm or not greater than 80 mm, more advantageously not greater than 60 mm or not greater than 50 mm. Suitably, at least 50%, more advantageously at least 60%, more suitably at least 70% and most advantageously at least 80% of the first structural units 15a of the inner structures of the cultivation substrate 1 are placed according to the above-mentioned distances.

Advantageously, the distance between two second structural units 15b closest to each other in at least one point, preferably calculated as an average, is at least 5 mm, more advantageously at least 10 mm, more suitably at least 15 mm or at least 20 mm. Advantageously, the distance between two second structural units 15b closest to each other in at least one point, preferably calculated as an average, is not greater than 100 mm or not greater than 80 mm, and more advantageously not greater than 60 mm or not greater than 50 mm. Suitably, at least 50%, more advantageously at least 60%, more suitably at least 70% and most advantageously at least 80% of the second structural units 15b of the inner structures of the cultivation substrate 1 are placed according to the above-mentioned distances.

One function of a so-called large gap 9b formed by two first structural units 15a and two second structural units 15b is to act as an air opening, that is, to form so-called air spaces.

Preferably, the air space or large gap 9b is substantially vertical. The area of the air gap 9b, defined in the horizontal plane, is advantageously greater than 50 mm², more advantageously at least 100 mm², more suitably at least 200 mm², and most advantageously at least 500 mm². Thanks to the air spaces, it is possible to optimize the raw material quantity needed for the cultivation substrate, the weight of the cultivation substrate, as well as the supply of a sufficient amount of air for the roots of the plant. Preferably, the large gaps 9b are substantially parallel to each other.

The proportion of the large gaps 9b, whose area is greater than 25 mm², advantageously greater than 50 mm², more advantageously greater than 100 mm², and most advantageously greater than 200 mm², measured in the horizontal plane, of the whole surface area of the inner structures 5 of the cultivation substrate (that is, the cultivation area of the cultivation substrate) is advantageously at least 50%, more suitably at least 70%, more advantageously at least 80%, and most advantageously at least 90%, measured in the horizontal plane.

Preferably, the proportion of the large gaps 9b, whose area is greater than 25 mm², advantageously greater than 50 mm², more advantageously greater than 100 mm², and most advantageously greater than 200 mm², measured in the horizontal plane, of the whole surface area of the inner structures 5 of the cultivation substrate is not greater than 99%, measured in the horizontal plane.

The thickness of a single structural unit 15a, 15b of the cultivation substrate at the equilibrium moisture content is advantageously at least 1 mm, more advantageously at least 1.5 mm or 2 mm, and most advantageously at least 3 mm. Preferably, the thickness of a single structural unit 15a, 15b at the equilibrium moisture content is not greater than 20 mm, more advantageously not greater than 15 mm, more suitably not greater than 10 mm, and most suitably not greater than 7 mm. In an example, the thickness of a single structural unit of the cultivation substrate at the equilibrium moisture content is 1 to 20 mm, more advantageously 1.5 to 10 mm, and most advantageously 2 to 7 mm.

In an example, the inner structures 5 of the cultivation substrate, that is, the cultivation area of the cultivation substrate, consists of structural units 15a, 15b with a thickness of about 2 mm, as well as large gaps 9b therebetween, the area of the gaps being about 10 cm × 10 cm.

Preferably, both the large gaps 9b or air spaces, and the small gaps 9b or porous structures are substantially parallel; preferably, they are substantially vertical. However, they may also be at different angles to each other. Advantageously, the difference between the orientation of a large gap 9b or air space and a small gap 9b or porous structures is not greater than 45°, more suitably not greater than 20°, more advantageously not greater than 10°, and most suitably not greater than 5°.

Preferably, incisions 12 are made in the first structural unit 15a and the second structural unit 15b of the cultivation substrate 1, for connecting said first structural unit 15a and said second structural unit 15g to each other. Preferably, the first and second structural units of the inner structures 5 of the cultivation substrate 1 comprise vertical incisions. Said incisions 12 can be implemented, for example, by die cutting. Advantageously, the structural unit 15a, 15b is ready die cut and/or corrugated inner material 5a. Suitably, the first and second structural units comprise at least one, more advantageously at least two or at least three incisions. Preferably, incisions are provided in at least those points where the first and second structural units cross each other.

The incisions of the first structural unit 15a and the second structural unit 15b are preferably implemented by making the incisions in the upper part of the first structural unit 15a and in the lower part of the second structural unit 15b, or alternatively, in the lower part of the first structural unit 15a and in the upper part of the second structural unit 15b. It is also possible to implement incisions both in the upper part and in the lower part of the structural unit, as shown in Fig. 6.

If the cultivation substrate 1 comprises a frame 4 of the cultivation substrate, the structural unit 15a, 15b of the cultivation substrate can be placed in connection with the frame 4, which can be done, for example, by gluing said structural unit, for example at its one end or both ends, to the frame 4 of the cultivation substrate 1. Thus, if the inner edges of the frame 4 of the cultivation substrate 1 comprise grooves, the structural unit 15a, 15b can be inserted and/or glued in said grooves made in the frame 4 of the cultivation substrate 1. By fastening the structural unit 15a, 15b to the frame 4 of the cultivation substrate 1, it is possible to further increase the strength of the inner structures 5 of the cultivation substrate.

With the solution according to the invention, a sturdy cultivation substrate can be obtained, in which the vertical parts of the inner material 5a can convey water and nutrients for the plant. Preferably, the cultivation substrate of Fig. 6 comprises spaces/gaps 9b between the structural units 15a, 15b in such a way that the distance between two substantially parallel structural units 15a, 15b closest to each other is at least 5 mm, preferably at least 10 mm. Furthermore, the cultivation substrate 1 thus comprises an advantageously layered wavelike structure with at least one, preferably at least two wavelike layers, where the diameter of the openings formed by the wave pattern is smaller than 5 mm, more advantageously smaller than 3 mm, and most advantageously smaller than 1.5 mm.

The solution according to the invention may be mechanically strong, wherein the inner structure of the cultivation substrate typically does not collapse too much even under heavy plants. By the solution according to the invention, the risk of excessive watering is reduced, because the inner material of the watering vessel takes up a lot of liquid, reducing the need for watering "to be on the safe side". Furthermore, the plant obtains a substantial benefit from the air gaps according to the solution of the invention.

The cultivation substrate according to the invention may be both compostable and combustible. Preferably, no substantial amounts of nutrients are left in the environment during the composting.

It should be noted that the elements presented in the different examples may also be combined, for example in such a way that the inner structures comprise inner material that has been both rolled and folded or placed in another way. The invention is not limited solely to the examples presented in Figs. 1 to 7 and the above description, but it may be modified within the scope of the present disclosure. The invention is defined by the appended claims.

## Claims

1. A cultivation substrate (1) comprising one or more inner structures (5) comprising web-like or sheet-like inner material (5a) with a dry content of at least 40 wt% of natural fibres,
**wherein**
the inner structures (5) of the cultivation substrate (1) comprise, in use, spaces and/or gaps (9), whose proportion at the equilibrium moisture content is at least 20% of the volume of the cultivation substrate (1), and
the inner structures (5) of the cultivation substrate (1) are arranged, at least primarily, substantially vertically in the cultivation substrate (1), wherein also said gaps/spaces (9) of the cultivation substrate (1) are primarily vertical.

2. The cultivation substrate according to claim 1, **characterized in that** the proportion of the spaces and gaps (9) at the equilibrium moisture content is at least 50% of the volume of the cultivation substrate (1).

3. The cultivation substrate according to claim 2, **characterized in that** the proportion of the spaces and gaps (9) at the equilibrium moisture content is at least 80% of the volume of the cultivation substrate (1).

4. The cultivation substrate according to claim 1, 2 or 3, **characterized in that** the inner structure (5) of the cultivation substrate (1) comprises inner material (5a), whose dry density is at least 20 kg/m³, more advantageously at least 100 kg/m³.

5. The cultivation substrate according to any of the claims 1 to 4, **characterized in that** the inner material (5) used is a web and/or a sheet whose thickness at the equilibrium moisture content is 0.03 to 2.0 mm.

6. The cultivation substrate according to any of the claims 1 to 5, **characterized in that** the inner structure (5) of the cultivation substrate (1) comprises at least two, more advantageously several parallel walls formed of the inner material (5a), gaps being formed between the walls at the equilibrium moisture content.

7. The cultivation substrate according to any of the claims 1 to 6, **characterized in that** the inner structure (5) of the cultivation substrate (1) comprises, in its part that comes towards the plant, substantially horizontal planes which extend from the horizontal plane substantially vertically towards the lower part of the cultivation substrate (1).

8. The cultivation substrate according to any of the claims 1 to 5, **characterized in that** the inner structure (5) of the cultivation substrate (1) comprises inner material (5a) wound in a roll.

9. The cultivation substrate according to any of the claims 1 to 8, **characterized in that** the inner structure (5) of the cultivation substrate (1) comprises folded inner material (5a).

10. The cultivation substrate according to any of the claims 1 to 9, **characterized in that** the cultivation substrate (1) comprises a frame (4), and that the cultivation substrate comprises fastening points in the frame (4) of the cultivation substrate, such as grooves, in which inner material (5a) is fitted to form the inner structure (5).

11. The cultivation substrate according to any of the claims 1 to 10, **characterized in that** the inner structure (5) of the cultivation substrate comprises inner material (5a) glued to the frame (4) and/or in the grooves in the frame (4).

12. The cultivation substrate according to any of the claims 1 to 11, **characterized in that** the cultivation substrate (1) comprises at least one supporting structure (7) for strengthening the structure of the cultivation substrate (1).

13. An arrangement comprising
- the cultivation substrate (1) of any of the claims 1 to 12 and
- a plant (2), wherein
- the plant is placed above and/or on top of the inner structures (5).

14. A cultivation substrate (1) according to any of the claims 1 to 12, **wherein**
- the cultivation substrate comprises, in use, one or more large gaps (9b) with an area of at least 25 mm², measured in the horizontal direction, and
- the proportion of the large gaps (9b) of the cultivation substrate, having an area of at least 25 mm², of the whole surface area of the inner structures (5) of the cultivation substrate, measured in the horizontal direction, is at least 50%.

15. An arrangement comprising
- a cultivation substrate (1) of claim 14 and
- a plant (2), wherein
- the plant is placed above and/or on top of the inner structures (5).

## Patentansprüche

1. Kultivierungssubstrat (1), umfassend eine oder mehrere Innenstrukturen (5), umfassend ein bahn- oder lagenartiges Innenmaterial (5a) mit einem Trockengehalt von mindestens 40 Gew.-% an natürlichen Fasern, wobei die Innenstrukturen (5) des Kultivierungssubstrats (1) im Gebrauch Zwischenräume und/oder Spalte (9) umfassen, deren Anteil bei Gleichgewichtsfeuchte mindestens 20 % des Volumens des Kultivierungssubstrats (1) beträgt, und
die Innenstrukturen (5) des Kultivierungssubstrats (1) zumindest primär im Wesentlichen vertikal in dem Kultivierungssubstrat (1) angeordnet sind, wobei auch die Spalte/Zwischenräume (9) des Kultivierungssubstrats (1) primär vertikal sind.

2. Kultivierungssubstrat gemäß Anspruch 1, **dadurch gekennzeichnet, dass** der Anteil der Zwischenräume und Spalte (9) bei Gleichgewichtsfeuchte mindestens 50 % des Volumens des Kultivierungssubstrats (1) beträgt.

3. Kultivierungssubstrat gemäß Anspruch 2, **dadurch gekennzeichnet, dass** der Anteil der Zwischenräume und Spalte (9) bei Gleichgewichtsfeuchte mindestens 80 % des Volumens des Kultivierungssubstrats (1) beträgt.

4. Kultivierungssubstrat gemäß Anspruch 1, 2 oder 3, **dadurch gekennzeichnet, dass** die Innenstruktur (5) des Kultivierungssubstrats (1) ein Innenmaterial (5a) umfasst, dessen Trockendichte mindestens 20 kg/m³, mehr vorteilhaft mindestens 100 kg/m³ beträgt.

5. Kultivierungssubstrat gemäß einem der Ansprüche 1 bis 4, **dadurch gekennzeichnet, dass** das verwendete Innenmaterial (5) eine Bahn und/oder eine Lage ist, deren Dicke bei Gleichgewichtsfeuchte 0,03 bis 2,0 mm beträgt.

6. Kultivierungssubstrat gemäß einem der Ansprüche 1 bis 5, **dadurch gekennzeichnet, dass** die Innenstruktur (5) des Kultivierungssubstrats (1) mindestens zwei, mehr vorteilhaft mehrere parallele Wände umfasst, die aus dem Innenmaterial (5a) ausgebildet sind, wobei bei Gleichgewichtsfeuchte Spalten zwischen den Wänden ausgebildet sind.

7. Kultivierungssubstrat gemäß einem der Ansprüche 1 bis 6, **dadurch gekennzeichnet, dass** die Innenstruktur (5) des Kultivierungssubstrats (1) in ihrem Teil, der zur Pflanze gerichtet ist, im Wesentlichen horizontale Ebenen umfasst, die sich von der horizontalen Ebene im Wesentlichen vertikal zum unteren Teil des Kultivierungssubstrats (1) erstrecken.

8. Kultivierungssubstrat gemäß einem der Ansprüche 1 bis 5, **dadurch gekennzeichnet, dass** die Innenstruktur (5) des Kultivierungssubstrats (1) ein in eine Rolle aufgewickeltes Innenmaterial (5a) umfasst.

9. Kultivierungssubstrat gemäß einem der Ansprüche 1 bis 8, **dadurch gekennzeichnet, dass** die Innenstruktur (5) des Kultivierungssubstrats (1) ein gefaltetes Innenmaterial (5a) umfasst.

10. Kultivierungssubstrat gemäß einem der Ansprüche 1 bis 9, **dadurch gekennzeichnet, dass** das Kultivierungssubstrat (1) einen Rahmen (4) umfasst und dass das Kultivierungssubstrat Befestigungspunkte in dem Rahmen (4) des Kultivierungssubstrats umfasst, wie Nuten, in welchen das Innenmaterial (5a) eingepasst ist, um die Innenstruktur (5) zu bilden.

11. Kultivierungssubstrat gemäß einem der Ansprüche 1 bis 10, **dadurch gekennzeichnet, dass** die Innenstruktur (5) des Kultivierungssubstrats ein Innenmaterial (5a) umfasst, das an den Rahmen (4) und/oder in die Nuten in dem Rahmen (4) geklebt ist.

12. Kultivierungssubstrat gemäß einem der Ansprüche 1 bis 11, **dadurch gekennzeichnet, dass** das Kultivierungssubstrat (1) mindestens eine Tragstruktur (7) umfasst, um die Struktur des Kultivierungssubstrats (1) zu stärken.

13. Anordnung, umfassend
- das Kultivierungssubstrat (1) nach einem der Patentansprüche 1 bis 12 und
- eine Pflanze (2), wobei
- die Pflanze über und/oder auf den Innenstrukturen (5) angeordnet ist.

14. Kultivierungssubstrat (1) gemäß einem der Ansprüche 1 bis 12, wobei das Kultivierungssubstrat im Gebrauch eine oder mehrere große Spalte (9b) mit einer Fläche von mindestens 25 mm², gemessen in horizontaler Richtung, umfasst, und
der Anteil der großen Spalte (9b) des Kultivierungssubstrats, die eine Fläche von mindestens 25 mm² der gesamten Mantelfläche der Innenstrukturen (5) des Kultivierungssubstrats, gemessen in horizontaler Richtung, aufweisen, mindestens 50 % beträgt.

15. Anordnung, umfassend
- ein Kultivierungssubstrat (1) nach Anspruch 14 und
- eine Pflanze (2), wobei
- die Pflanze über und/oder auf den Innenstrukturen (5) angeordnet ist.

## Revendications

1. Substrat de culture (1) comprenant une ou plusieurs structures internes (5) comprenant un matériau interne (5a) en forme de bande ou en forme de feuille dont la teneur en matière sèche s'élève à au moins 40 % en poids de fibres naturelles; dans lequel les structures internes (5) du substrat de culture (1) comprennent, en cours d'utilisation, des espaces et/ou des lacunes (9) dont la proportion, à la teneur en humidité en équilibre, représente au moins 20 % du volume du substrat de culture (1) ; et les structures internes (5) du substrat de culture (1) sont disposées, au moins à titre principal, essentiellement à la verticale dans le substrat de culture (1) ; dans lequel également lesdites lacunes/lesdits espaces (9) du substrat de culture (1) sont principalement verticaux.

2. Substrat de culture selon la revendication 1, **caractérisé en ce que** la proportion des espaces et des lacunes (9), à la teneur en humidité en équilibre, représente au moins 50 % du volume du substrat de culture (1).

3. Substrat de culture selon la revendication 2, **caractérisé en ce que** la proportion des espaces et des lacunes (9), à la teneur en humidité en équilibre, représente au moins 80 % du volume du substrat de culture (1).

4. Substrat de culture selon la revendication 1, 2 ou 3, **caractérisé en ce que** la structure interne (5) du substrat de culture (1) comprend un matériau interne (5a) dont la masse volumique à sec s'élève à au moins 20 kg/m³, de manière plus avantageuse à au moins 100 kg/m³.

5. Substrat de culture selon l'une quelconque des revendications 1 à 4, **caractérisé en ce que** le matériau interne (5a) que l'on utilise représente une bande et/ou une feuille dont l'épaisseur, à la teneur en humidité en équilibre, s'élève de 0,03 à 2,0 mm.

6. Substrat de culture selon l'une quelconque des revendications 1 à 5, **caractérisé en ce que** la structure interne (5) du substrat de culture (1) comprend au moins deux, de manière plus avantageuse un certain nombre de parois parallèles formées à partir du matériau interne (5a), des lacunes étant réalisées entre les parois, à la teneur en humidité en équilibre.

7. Substrat de culture selon l'une quelconque des revendications 1 à 6, **caractérisé en ce que** la structure interne (5) du substrat de culture (1) comprend, dans sa partie qui est orientée vers la plante, des plans essentiellement horizontaux qui s'étendent à partir du plan horizontal essentiellement à la verticale en direction de la partie inférieure du substrat de culture (1).

8. Substrat de culture selon l'une quelconque des revendications 1 à 5, **caractérisé en ce que** la structure interne (5) du substrat de culture (1) comprend un matériau interne (5a) enroulé pour obtenir un rouleau.

9. Substrat de culture selon l'une quelconque des revendications 1 à 8, **caractérisé en ce que** la structure interne (5) du substrat de culture (1) comprend un matériau interne replié (5a).

10. Substrat de culture selon l'une quelconque des revendications 1 à 9, **caractérisé en ce que** le substrat de culture (1) comprend un cadre (4) ; et **en ce que** le substrat de culture comprend des points de fixation dans le cadre (4) du substrat de culture, tels que des rainures dans lesquelles le matériau interne (5a) est inséré pour former la structure interne (5).

11. Substrat de culture selon l'une quelconque des revendications 1 à 10, **caractérisé en ce que** la structure interne (5) du substrat de culture (1) comprend un matériau interne (5a) collé au cadre (4) et/ou dans les rainures dans le cadre (4).

12. Substrat de culture selon l'une quelconque des revendications 1 à 11, **caractérisé en ce que** le substrat de culture (1) comprend au moins une structure de support (7) destinée à renforcer la structure du substrat de culture (1).

13. Agencement comprenant :
- le substrat de culture (1) selon l'une quelconque des revendications 1 à 12 ; et
- une plante (2) ; dans lequel
- la plante est placée au-dessus des structures internes (5) et/ou par-dessus ces dernières.

14. Substrat de culture selon l'une quelconque des revendications 1 à 12, dans lequel :
- le substrat de culture comprend, lors de son utilisation, une ou plusieurs grandes lacunes (9b) possédant une superficie d'au moins 25 mm², que l'on mesure dans la direction horizontale ; et
- la proportion des grandes lacunes (9b) du substrat de culture possédant une superficie d'au moins 25 mm², de l'aire de surface totale des structures internes (5) du substrat de culture, que l'on mesure en direction horizontale, représente au moins 50 %.

15. Agencement comprenant :
- un substrat de culture (1) selon la revendication 14 ; et
- une plante (2) ; dans lequel
- la plante est placée au-dessus des structures internes (5) et/ou par-dessus ces dernières.
